(19) Europäisches Patentamt
European Patent Office
Office européen des brevets

(11) **EP 1 854 226 B1**

(12) **FASCICULE DE BREVET EUROPEEN**

(45) Date de publication et mention
de la délivrance du brevet:
**11.07.2012 Bulletin 2012/28**

(51) Int Cl.:
*H04J 3/06* (2006.01)      *H04L 7/00* (2006.01)
*H04L 7/04* (2006.01)

(21) Numéro de dépôt: 06708385.7

(22) Date de dépôt: **20.02.2006**

(86) Numéro de dépôt international:
**PCT/EP2006/060102**

(87) Numéro de publication internationale:
**WO 2006/089875 (31.08.2006 Gazette 2006/35)**

(54) **PROCEDE ET DISPOSITIF DE SYNCHRONISATION DE LIAISONS RECTILIGNES OU QUASI-RECTILIGNES EN PRESENCE D'INTERFERENCES**

VERFAHREN UND EINRICHTUNG ZUM SYNCHRONISIEREN VON RECHTECKIGEN ODER QUASIRECHTECKIGEN STRECKEN BEI ANWESENHEIT VON STÖRUNGEN

METHOD AND DEVICE FOR SYNCHRONIZING RECTILINEAR OR QUASI-RECTILINEAR LINKS IN THE PRESENCE OF INTERFERENCE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **22.02.2005 FR 0501784**

(43) Date de publication de la demande:
**14.11.2007 Bulletin 2007/46**

(73) Titulaire: **THALES**
**92200 Neuilly sur Seine (FR)**

(72) Inventeurs:
• **CHEVALIER, Pascal**
**F-92400 Courbevoie (FR)**
• **PIPON, François**
**F-75018 Paris (FR)**
• **DELAVEAU, François**
**F-94170 Le Perreux Sur Marne (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 0 665 665     EP-A- 1 359 685**

• **PICINBONO B ET AL: "WIDELY LINEAR ESTIMATION WITH COMPLEX DATA" IEEE TRANSACTIONS ON SIGNAL PROCESSING, IEEE, INC. NEW YORK, US, vol. 43, no. 8, 1 août 1995 (1995-08-01), pages 2030-2033, XP000526122 ISSN: 1053-587X cité dans la demande**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne notamment un procédé et un dispositif de synchronisation d'une liaison rectiligne ou quasi-rectiligne en présence d'interférences de même nature, à partir d'une ou plusieurs antennes de réception. Le document EP 0665665 décrit un tel procédé.

Il permet en particulier la prise de synchronisation, à partir d'une seule antenne, d'une liaison perturbée par une interférence, l'interférence pouvant être de même nature.

Dans la présente description, on désigne par « liaison rectiligne » une liaison pour laquelle le signal transmis est rectiligne, c'est-à-dire qu'il possède une enveloppe complexe réelle, ou une modulation mono dimensionnelle, comme cela est le cas pour les signaux à modulation d'amplitude AM (amplitude modulation), ASK (en anglo-saxon Amplitude Shift Keying) ou les signaux à modulation par déplacement de phase binaire BPSK. Une liaison est dite quasi-rectiligne si le signal transmis est quasi-rectiligne, c'est-à-dire si la partie réelle de son enveloppe complexe contient toute l'information véhiculée par ce signal. Parmi les signaux quasi-rectilignes, on peut citer en particulier les signaux MSK ou GMSK ayant subi un pré-traitement de dérotation.

L'invention trouve notamment son application dans les systèmes exploitant des modulations rectilignes, ou rendues quasi-rectilignes après pré-traitement, comme certains systèmes d'identification ennemi-ami ou IFF (Identification Friend Foe en modes S et 5) ou encore certains réseaux (cellulaires ou non) de radiocommunications tels que le réseau pour les communications mobiles GSM (Global System for Mobile communications), pour lesquels la principale source d'interférences est le réseau lui-même.

Le problème de la synchronisation des liaisons en présence d'interférences est un problème qui a reçu une énorme attention ces deux dernières décennies, principalement dans le but de lutter contre les interférences co-canal dans le contexte des réseaux à accès multiple reposant sur un code ou CDMA (Code divisons multiple access).

Ces techniques fonctionnent à partir d'une [1-2] ou de plusieurs antennes [3-5] [9] en réception. Toutefois, les techniques mono-capteur sont toutes très spécifiques du contexte CDMA et ne peuvent s'envisager dans les réseaux F/TDMA (réseau à accès multiple ou time-division multiple access, à faible (ou à fort) saut de fréquence (ou en anglo-saxon slow (or quick) time-frequency hopping (F-TDMA)). D'autre part, les techniques multi-capteurs proposées dans [4] [9] sont analogiques alors que celles issues de [3] restent aussi spécifiques des réseaux CDMA dans la mesure où les codes d'étalement sont supposés non modulés aléatoirement par des symboles d'information. En fait, seule l'approche au sens du maximum de vraisemblance proposée dans [5] peut s'envisager en dehors du contexte CDMA. Toutefois, cette approche suppose les interférences Gaussiennes stationnaires, et donc circulaires à l'ordre 2, et n'exploite aucun a priori particulier sur celles-ci. En particulier, l'approche proposée dans [5] devient sous-optimale en présence d'interférences non circulaires à l'ordre 2, pour lesquelles la seconde fonction de corrélation n'est pas identiquement nulle, propriété caractéristique des signaux GMSK utilisés par les réseaux GSM en particulier, lesquelles deviennent quasi-rectilignes après pré-traitement.

L'objet de l'invention concerne notamment un procédé et un dispositif de synchronisation d'une liaison rectiligne ou rendue quasi-rectiligne après pré-traitement, exploitant le caractère potentiellement non circulaire des interférences et particulièrement performante pour des interférences, dites internes, elles-mêmes rectilignes ou quasi-rectilignes après pré-traitement.

L'idée de l'invention consiste notamment à exploiter la connaissance d'une séquence d'apprentissage insérée dans les bursts de la liaison pour la prise de synchronisation en particulier et met en oeuvre un filtrage LSL (Linéaire au Sens Large) optimal sur les observations. Rappelons qu'un filtrage LSL est un filtrage linéaire conjoint des observations et des observations complexes conjuguées [7].

L'invention concerne un procédé de synchronisation d'un signal sensiblement rectiligne se propageant à travers un canal inconnu, en présence d'interférences sensiblement rectilignes inconnues, reçu par un réseau de N capteurs, dans lequel on utilise une séquence d'apprentissage $s(nT)$ connue de K symboles et échantillonnée au rythme symbole $T$ ($s(nT)$, $0 \le n \le K - 1$) caractérisé en ce que l'on définit à partir des observations $x((n + l/p)T)$ sur la durée de la séquence d'apprentissage, où $p = T/Te$ est entier et $Te$ la période d'échantillonnage, un vecteur observation virtuel $\boldsymbol{X}((n + l/p)T)$ $= [\boldsymbol{x}((n + l/p)T)^{\mathrm{T}}, \boldsymbol{x}((n + l/p)T)^{\dagger}]^{\mathrm{T}}$, ainsi qu'un critère de décision ou statistique de décision en tenant compte du caractère non circulaire à l'ordre 2 des interférences, en utilisant les première et seconde matrices de corrélation du vecteur observation virtuel $\boldsymbol{X}((n + l/p)T)$.

Pour des signaux rectilignes, le procédé comporte, par exemple les étapes suivantes :

- acquérir des vecteurs observation ($N$ x 1), $\boldsymbol{x}((l/p + n)T)$, $0 \le n \le K - 1$, où $T = pT_e$ est la durée symbole, $p$ un entier et $T_e$ la période d'échantillonnage, 1 le retard du signal,
- construire des vecteurs observation virtuels ($2N$ x 1), $\boldsymbol{X}((n + l/p)T) = [\boldsymbol{x}((n + l/p)T)^{\mathrm{T}}, \boldsymbol{x}((n + l/p)T)^{\dagger}]^{\mathrm{T}}$,
- choisir L le nombre de coefficients temporels et construire des vecteurs observation virtuels spado-temporels ($2LN$ x 1), $\boldsymbol{X}_{st}((n + l/p)^{T}) \triangleq [\boldsymbol{X}((l/p + n + (L - 1)/2)T)^{\mathrm{T}},..., \boldsymbol{X}((l/p + n - (L - 1)/2)T)^{\mathrm{T}}]^{\mathrm{T}}$ si $L$ est impair et $\boldsymbol{X}_{st}((l/p + n)T) \triangleq [\boldsymbol{X}((l/p + n + L/2)T)^{\mathrm{T}},..., \boldsymbol{X}((l/p + n - L/2 + 1)T)^{\mathrm{T}}]^{\mathrm{T}}$ si $L$ est pair,

- déterminer le vecteur d'inter-corrélation. $\hat{r}_{Xst,s}(l)$ et la matrice de corrélation $\hat{R}_{X,st}(l)$ des observations spatio-temporelles, pour l'instant d'échantillonnage $l$, en tenant compte de la seconde matrice de corrélation du vecteur $x((l/p + n)T)$,
- définir un filtre spatio-temporel ST et son estimée à partir de $\hat{R}_{X,st}(l)$ et $\hat{r}_{X,st,s}(l)$, tel que $\hat{W}_{st}(l) \triangleq \hat{R}_{X,st}(l)^{-1} \hat{r}_{X,st,s}(l)$,
- définir un critère de synchronisation $\hat{C}_{NCIR-LR(l)}$ en corrélant la sortie du filtre spatio-temporel $\boldsymbol{W}_{st}(l)$ et la séquence d'apprentissage,
- comparer le critère $\hat{C}_{NCIR-LR(l)}$ à un seuil β fixé pour une probabilité de fausse alarme donnée.

Le procédé, pour des signaux CPM à deux états, comporte une étape de pré-traitement de dérotation des observations reçues afin notamment de rendre quasi-rectiligne le signal.

Le critère de décision est par exemple obtenu de la manière suivante :

$$\hat{C}_{NCIR-LR}(l) \quad \triangleq \quad \frac{\hat{r}_{X,st,s}(l)^{\dagger}\,\hat{R}_{X,st}(l)^{-1}\hat{r}_{X,st,s}(l)}{(1/K)\sum\limits_{n=0}^{K-1}|s(nT)|^2}$$

où la matrice $(2LN \times 2LN)$ $\hat{R}_{X,st}(l)$ et le vecteur $(2LN \times 1)$ $\hat{r}_{X,st,s}(l)$ sont définis respectivement par :

$$\hat{R}_{X,st}(l) \quad \triangleq \quad \frac{1}{K}\sum\limits_{n=0}^{K-1} X_{st}((l/p + n)T)\,X_{st}((l/p + n)T)^{\dagger}$$

$$\hat{r}_{X,st,s}(l) \quad \triangleq \quad \frac{1}{K}\sum\limits_{n=0}^{K-1} X_{st}((l/p + n)T)\ s(nT)^{*}$$

où $0 \le \hat{C}_{NCIR-LR(l)} \le 1$.

L'invention concerne aussi un dispositif pour synchroniser un signal sensiblement rectiligne se propageant à travers un canal inconnu, en présence d'interférences sensiblement rectilignes inconnues, dans un réseau de N capteurs, dans lequel on utilise une séquence d'apprentissage $s(nT)$ connue de **K** symboles et échantillonnée au rythme symbole $(s(nT), 0 \le n \le K - 1)$ caractérisé en ce qu'il comporte un dispositif adapté à déterminer un critère de décision ou statistique de décision à partir des observations $x((n + l/p)T)$ sur la durée de la séquence d'apprentissage, où $p = T/Te$ est entier et $Te$ la période d'échantillonnage, un vecteur observation virtuel $X((n + l/p)T) = [x((n + l/p)T)^{T}, x((n + l/p)T)^{\dagger}]^{T}$, ainsi qu'un critère de décision ou statistique de décision en tenant compte du caractère non circulaire à l'ordre 2 des interférences, en utilisant les première et seconde matrices de corrélation du vecteur observation virtuel $X((n + l/p)T)$.

Le dispositif comporte, par exemple un réseau de capteurs virtuels (N+1 à 2N), un filtre (1), un dispositif de corrélation du signal issu du filtre et de la séquence d'apprentissage, un dispositif de décision recevant le signal corrélé.

Il peut aussi comporter un dispositif adapté à transformer un signal CPM à 2 états en un signal quasi-rectiligne.

Le procédé et le dispositif sont utilisés par exemple pour la synchronisation d'un signal à modulation mono-dimensionnelle : ASK, BPSK...ou celle d'un signal CPM à 2 états de type MSK, GMSK...

L'invention présente notamment comme avantages de réduire, à performances constantes, le nombre de capteurs en réception et permet aussi d'envisager une prise de synchronisation à partir d'une seule antenne en présence d'une interférence.

D'autres caractéristiques et avantages de la présente invention apparaîtront mieux à la lecture de la description qui suit d'un exemple illustratif et nullement limitatif annexée des figures qui représentent :

- La figure 1 un schéma fonctionnel du dispositif de synchronisation selon l'invention,

- La figure 2 des exemples de configugration pour la synchronisation optimale en présence d'une interférence BPSK,
- La figure 3 des exemples de constellation utile et interférente en sortie du filtre.

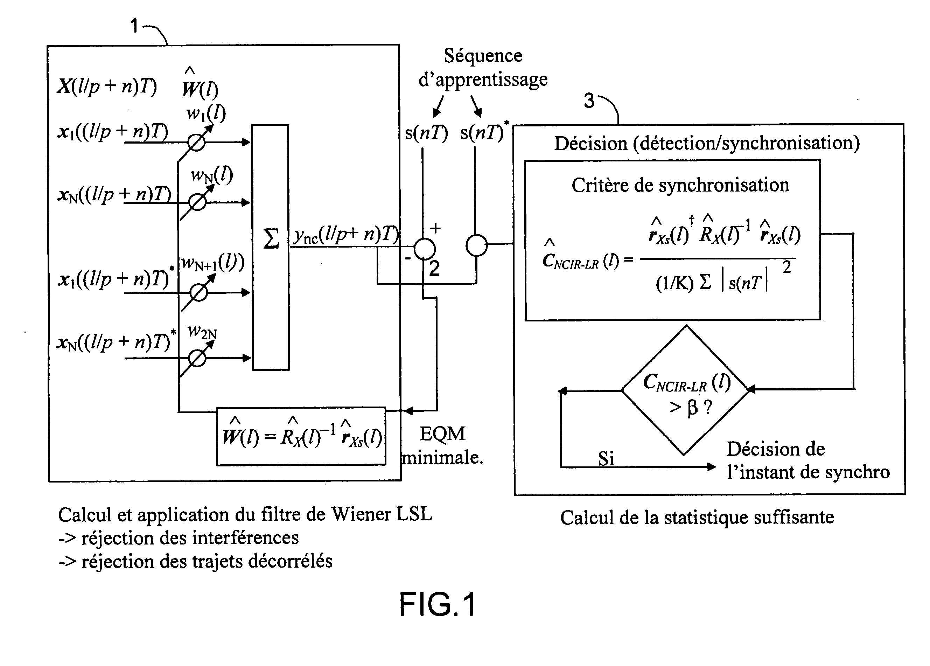

La figure 1 représente un synoptique d'un exemple de dispositif selon l'invention dans le cas d'une modulation BPSK comprenant : un réseau de N capteurs référencés 1 à N sur la figure, N voies de réception, un réseau virtuel de capteurs référencés N+1 à 2N sur la figure, un filtre 1, un moyen 2 permettant la corrélation d'un signal de référence avec le signal issu du filtre, un dispositif 3 de décision (détection/synchronisation).

Le filtre 1 est par exemple un filtre de Wiener LSL et a notamment pour fonction la réjection des interférences et la réjection des trajets décorrélés.

Le dispositif de décision 3 est adapté à calculer la statistique suffisante et à effectuer une comparaison de cette statistique à un seuil fixé. Ces mécanismes sont décrits ci-après.

Cet exemple est donné à titre illustratif pour permettre une compréhension de l'invention. Il est bien entendu que ce schéma peut être modifié et adapté au traitement de signaux AM, ASK, MSK ou GMSK, etc.. Cette liste est donnée à titre illustrative.

Avant de détailler la mise en oeuvre des étapes du procédé selon l'invention, quelques rappels et hypothèses nécessaires à sa compréhension sont exposés.

On considère une antenne à $N$ capteurs à bande étroite (BE) recevant la contribution d'une source utile rectiligne, supposée modulée en BPSK (en anglo-saxon Phase shift keying) pour simplifier, et d'un bruit total composé d'interférences rectilignes et de bruit de fond. Sous ces hypothèses, le vecteur, $x(kT_e)$, des enveloppes complexes des signaux échantillonnés et observés en sortie des capteurs est donné par :

$$x(kT_e) \approx s((k - l_O)T_e)\, h_S + b_T(kT_e) \tag{1}$$

où $T_e$ est la période d'échantillonnage, $b_T(kT_e)$ est le vecteur bruit total échantillonné, non corrélé à la source utile, $h_s$ est le vecteur des réponses impulsionnelles des canaux associés au signal utile, $l_0$ est le retard de propagation du signal utile, supposé égal à un multiple de $T_e$ pour simplifier, et $s(t)$ est l'enveloppe complexe du signal utile BPSK donnée par :

$$s(t) = \mu_S \sum_{n} a_n\, v(t - nT) \tag{2}$$

où $a_n = \pm 1$ sont des variables aléatoires indépendantes et identiquement distribuées (i.i.d) correspondant aux symboles transmis, $T$ est la durée du symbole, supposée telle que $T = pT_e$, où $p$ est un entier, $v(t)$ est le filtre de mise en forme en cosinusoïde surélevée (filtre de ½ Nyquist) et $\mu_S$ est une valeur réelle contrôlant la puissance instantanée de $s(t)$. Notons que le modèle (1) suppose des canaux de propagation sans étalement temporel, ce qui se produit, par exemple, pour une propagation en espace libre (télécommunications par satellite, radiocommunications aéroportées) ou des canaux à évanouissement plat ou fading plat (certaines situations de radiocommunications en zone urbaine). En particulier, pour une propagation en espace libre, $h_s \triangleq e^{j\phi s}\, s$ où $\phi_s$ et $s$ correspondent respectivement à la phase et au vecteur directeur du signal utile.

Toutefois, le procédé développé dans ce document s'applique aussi à des canaux étalés temporellement. Dans ces conditions, la partie utile de (1) correspond en fait à la contribution d'un trajet ou mode de propagation. Les autres trajets sont dans le vecteur bruit total.

**Statistiques du second ordre des observations**

Les statistiques du second ordre, considérées dans la suite correspondent aux première, $R_x(k)$, et seconde, $C_x(k)$, matrices de corrélation de $x(kT_e)$, définies, sous les hypothèses précédentes, par :

$$R_x(k) \triangleq E[x(kT_e)\, x(kT_e)^{\dagger}] \approx \pi_S(k - l_O)\, h_S\, h_S^{\dagger} + R(k) \tag{3}$$

$$C_x(k) \;\triangleq\; \mathrm{E}[\boldsymbol{x}(kT_e)\,\boldsymbol{x}(kT_e)^{\mathrm{T}}] \;\approx\; \pi_s(k - l_o)\; \boldsymbol{h}_s\,\boldsymbol{h}_s{}^{\mathrm{T}} \;+\; C(k) \qquad (4)$$

lesquelles dépendent du temps dans la mesure où le signal utile BPSK est un signal cyclostationnaire et où le bruit total est aussi supposé cyclostationnaire avec les mêmes fréquences cycliques que le signal utile, ce qui est en particulier le cas en présence d'interférences internes.

Dans les expressions précédentes, le signe $\dagger$ signifie transposé conjugué, $R(k) \triangleq \mathrm{E}[\boldsymbol{b}_T(kT_e)\,\boldsymbol{b}_T(kT_e)^{\dagger}]$ et $C(k) \triangleq \mathrm{E}[\boldsymbol{b}_T(kT_e)\,\boldsymbol{b}_T(kT_e)^{\mathrm{T}}]$ sont respectivement les première et seconde matrices de corrélation du vecteur bruit $\boldsymbol{b}_T(kT_e)$, $\pi_s(k) \triangleq \mathrm{E}[|s(kT_e)|^2]$ est la puissance instantanée du signal utile reçu par un capteur omnidirectionnel pour une propagation en espace libre.

**Formulation du problème**

Dans un système de radiocommunications, des séquences d'apprentissage sont généralement transmises périodiquement à des fins de synchronisation, ce qui signifie en particulier que le signal utile $s(kT_e)$ est connu sur des intervalles de durée $K$ symboles, où $pK$ est le nombre d'échantillons de la séquence d'apprentissage. Dans un tel contexte, en supposant $R(k)$, $C(k)$ et $\boldsymbol{h}_s$ inconnus, le problème de la synchronisation optimale consiste à trouver la meilleure estimée, $\hat{l}_o$, de $l_o$ à partir des vecteurs observations $\boldsymbol{x}(kT_e)$ et connaissant le signal utile $s(kT_e)$ pour $0 \leq k \leq pK - 1$. Ce problème est aussi équivalent à trouver $l = \hat{l}_o$ tel que les échantillons connus $s(kT_e)$, $0 \leq k \leq pK - 1$, soient optimalement détectés à partir des vecteurs observations $\boldsymbol{x}((k+l)T_e)$, $0 \leq k \leq pK - 1$.

En se plaçant à l'instant de synchronisation optimal $l_o T_e$ et en considérant la situation à deux hypothèses :

H0 : présence de bruit total seulement dans $\boldsymbol{x}((k+l_o)T_e)$, et H1 : présence de bruit total et du signal utile dans $\boldsymbol{x}((k+l_o)T_e)$, on peut écrire :

$$\mathrm{H1}:\quad \boldsymbol{x}((k+l_o)T_e) \;\approx\; s((kT_e)\,\boldsymbol{h}_s \;+\; \boldsymbol{b}_T((k+l_o)T_e) \qquad (5a)$$

$$\mathrm{H0}:\quad \boldsymbol{x}((k+l_o)T_e) \;\approx\; \boldsymbol{b}_T((k+l_o)T_e) \qquad (5b)$$

Dans ce contexte, d'après la théorie statistique de la détection (au sens de Neyman Pearson) [8], la stratégie optimale de détection du signal utile $s(kT_e)$ à partir des observations $x((k+l_o)T_e)$ sur la durée de la séquence d'apprentissage, consiste à comparer à un seuil, le rapport de vraisemblance (RV), $L(x)(l_o)$, défini par :

$$L(\boldsymbol{x})(l_o) \;\triangleq\; \frac{\mathrm{p}[\boldsymbol{x}((k+l_o)T_e),\, 0 \leq k \leq pK - 1,\, /\,\mathrm{H1}]}{\mathrm{p}[\boldsymbol{x}((k+l_o)T_e),\, 0 \leq k \leq pK - 1,\, /\,\mathrm{H0}]} \qquad (6)$$

où $\mathrm{p}[\boldsymbol{x}((k+l_o)T_e),\, 0 \leq k \leq pK - 1\, /\, \mathrm{Hi}]$ ($i = 0, 1$) est la densité de probabilité conditionnelle du vecteur $[\boldsymbol{x}(l_o T_e)^{\mathrm{T}},\, \boldsymbol{x}((1+l_o)T_e)^{\mathrm{T}}, ..., \boldsymbol{x}((pK+l_o-1)T_e)^{\mathrm{T}}]^{\mathrm{T}}$ sous l'hypothèse H$i$.

L'idée de l'invention consiste notamment à exploiter le caractère non circulaire à l'ordre 2 des interférences tout en gardant l'hypothèse de bruit total Gaussien et celle de stationnarité du bruit total, en ne conservant qu'un échantillon de bruit total par symbole sur la durée de la séquence.

Cela signifie que l'on ne considère, sur la durée de la séquence d'apprentissage, que les vecteurs bruit $\boldsymbol{b}_T((l_o/p + n)T)$, $0 \leq n \leq K - 1$.

Sous ces hypothèses, la densité de probabilité du vecteur bruit total $\boldsymbol{b}_T((l_o/p + n)T)$ est donnée par :

$$p[\boldsymbol{B}_T((l_o/p + n)T)] \quad \triangleq$$

$$\pi^{-N} \det[R_B(l_O)]^{-1/2} \exp[-(1/2)\, \boldsymbol{B}_T((l_o/p + n)T)^{\dagger} R_B(l_O)^{-1} \boldsymbol{B}_T((l_o/p + n)T)] \qquad (7)$$

où $\boldsymbol{B}_T(l_o/p + n)T)$ est le vecteur (2$N$ x 1) défini par $\boldsymbol{B}_T((l_o/p + n)T) \triangleq [\boldsymbol{b}_T((l_o/p + n)T)^{\mathsf{T}}, \boldsymbol{b}_T((l_o/p + n)T)^{\dagger}]^{\mathsf{T}}$, et où $R_B(l_0)$ est la matrice (2$N$ x 2$N$) définie par :

$$R_B(l_O) \quad \triangleq \quad \mathrm{E}[\boldsymbol{B}_T((l_o/p + n)T)\, \boldsymbol{B}_T((l_o/p + n)T)^{\dagger}] \quad = \quad \begin{pmatrix} R(l_O) & C(l_O) \\ C(l_O)^* & R(l_O)^* \end{pmatrix} \qquad (8)$$

Dans ces conditions, en supposant les vecteurs $\boldsymbol{B}_T(l_o/p + \boldsymbol{n})$T) pour $0 \leq n \leq K - 1$, non corrélés, le rapport de vraisemblance RV, $L(\boldsymbol{x})(l_o)$, defini par (6), devient :

$$L(\boldsymbol{x})(l_O) \quad \triangleq \quad \frac{\prod\limits_{n=0}^{K-1} p[\boldsymbol{B}_T((l_o/p + n)T) = \boldsymbol{X}((l_o/p + n)T) - s(nT)\, \boldsymbol{H}_S \,/\, s(nT),\, \boldsymbol{H}_S,\, R_B(l_O)]}{\prod\limits_{n=0}^{K-1} p[\boldsymbol{B}_T((l_o/p + n)T) = \boldsymbol{X}((l_o/p + n)T) \,/\, R_B(l_O)]}$$

$$\qquad (9)$$

où les vecteurs (2$N$ x 1) $\boldsymbol{X}((l_o/p + n)T)$ et $\boldsymbol{H}_s$ (vecteur canal de propagation étendu) sont définis respectivement par $\boldsymbol{X}((l_o/p + n)T) \triangleq [\boldsymbol{x}((l_o/p + n)T)^{\mathsf{T}}, \boldsymbol{x}((l_o/p + {}_n)T)^{\dagger}]^{\mathsf{T}}$ et $\boldsymbol{H}_s \triangleq [\boldsymbol{h}_s^{\mathsf{T}}, \boldsymbol{h}_s^{\dagger}]^{\mathsf{T}}$. Les quantités $\boldsymbol{H}_s$ et $R_B(l_o)$ sont supposées inconnues et doivent être remplacées dans (9) par leur estimée au sens du maximum de vraisemblance. Dans ces conditions, on peut montrer, qu'après quelques manipulations mathématiques de l'expression (9), une statistique suffisante pour la détection optimale de la séquence $s(nT)$ à partir des vecteurs $\boldsymbol{x}((l_o/p + n)T)$, sur la durée de la séquence, $0 \leq n \leq K - 1$, est, pour un bruit total non circulaire à l'ordre 2, donnée par :

$$\hat{\mathrm{C}}_{NCIR\text{-}LR}(l_O) \quad \triangleq \quad \frac{\hat{\boldsymbol{r}}_{Xs}(l_O)^{\dagger}\, \hat{R}_X(l_O)^{-1}\, \hat{\boldsymbol{r}}_{Xs}(l_O)}{(1/K) \sum\limits_{n=0}^{K-1} |s(nT)|^2} \qquad (10)$$

où le vecteur $\hat{\boldsymbol{r}}_{Xs}(l_o)$ et la matrice $\hat{R}_X(l_o)$ sont donnés par :

$$\hat{\boldsymbol{r}}_{Xs}(l_O) \quad \triangleq \quad \frac{1}{K} \sum\limits_{n=0}^{K-1} \boldsymbol{X}((l_o/p + n)T)\, s(nT)^* \qquad (11)$$

$$\hat{R}_{X}(l_O) \quad \triangleq \quad \frac{1}{K} \sum_{n=0}^{K-1} \boldsymbol{X}((l_O/p + n)T)\, \boldsymbol{X}((l_O/p + n)T)^{\dagger} \qquad (12)$$

où $0 \leq \hat{C}_{NCIR-LR}(l_o) \leq 1$.

On déduit des résultats précédents que la stratégie de synchronisation optimale en bruit total Gaussien non circulaire, appelée stratégie optimale dans ce document, consiste à calculer, à chaque instant d'échantillonnage $lT_e$, l'expression $\hat{C}_{NCIR-LR}(l)$, définie par (10) où $l$ remplace $l_o$, et à comparer le résultat à un seuil, lequel est fixé pour une probabilité de fausse alarme donnée. L'instant de synchronisation optimal correspond alors à l'instant $lT_e = \hat{l}_o T_e$ tel que $\hat{l}_o$ génère la valeur maximale de $\hat{C}_{NCIR-LR}(l)$ parmi celles qui dépassent le seuil.

Le procédé de synchronisation pour les signaux rectilignes comprend par exemple les étapes suivantes :

- Etape 0 : Initialisation $l = l_{min}$ ($l_{min} = 0$ par exemple) et choix du seuil de détection $\beta$
- Etape 1 : Estimation de $\hat{\boldsymbol{r}}_{Xs}(l)$ et de $\hat{R}_X(l)$
- Etape 2 : Calcul de la statistique suffisante $\hat{C}_{NCIR-LR}(l)$
- Etape 3 : Comparaison de $\hat{C}_{NCIR-LR}(l)$ au seuil $\beta$
- Etape 4 : Décision

  ○ Si $\hat{C}_{NCIR-LR}(l) < \beta$

  ■ Si $\hat{C}_{NCIR-LR}(l-1) < \beta$

  • $l = l + 1$
  • retour à l'étape 1

  ■ Si $\hat{C}_{NCIR-LR}(l-1) \geq \beta$

  • L'instant de synchronisation est $\hat{l}_o T_e$ où $l = \hat{l}_o$ maximise $\hat{C}$ $NCIR-LR(l)$ sur l'ensemble des $l$ stockés

  ○ Si $\hat{C}_{NCIR-LR}(l) \geq \beta$

  • Stockage de $l$ et de $\hat{C}_{NCIR-LR}(l)$
  • $l = l + 1$
  • retour à l'étape 1

De manière à donner une interprétation plus physique au critère $\hat{C}_{NCIR-LR}(l)$, introduisons le filtre spatial LSL $\hat{\boldsymbol{W}}(l) \triangleq [\hat{\boldsymbol{w}}_{nc}(l)^T, \hat{\boldsymbol{w}}_{nc}(l)^{\dagger}]^T$ défini par

$$\hat{\boldsymbol{W}}(l) \quad \triangleq \quad \hat{R}_X(l)^{-1} \hat{\boldsymbol{r}}_{Xs}(l) \qquad (13)$$

En considérant que la séquence $s(nT)$ est une réalisation particulière d'un signal aléatoire, l'expression (13) n'est rien d'autre que l'estimée au sens des moindres carrés du filtre spatial LSL, $\boldsymbol{W}(l) \triangleq [\boldsymbol{w}_{nc}(l)^T, [\boldsymbol{w}_{nc}(l)^{\dagger}]^T \triangleq R_X(l)^{-1}\, \boldsymbol{r}_{Xs}(l)$, lequel minimise l'erreur quadratique moyenne (EQM) entre le signal $s(nT)$ et la sortie réelle $\boldsymbol{W}^{\dagger}\boldsymbol{X}((l/p + n)T) = 2\mathrm{Re}[\boldsymbol{w}^{\dagger}\boldsymbol{x}((l/p + n)T)]$, où $\boldsymbol{W} \triangleq [\boldsymbol{w}^T, \boldsymbol{w}^{\dagger}]^T$, $R_X(l) \triangleq E[\boldsymbol{X}((l/p + n)T)\, \boldsymbol{X}((l/p + n)T)^{\dagger}]$ et $\boldsymbol{r}_{Xs}(l) \triangleq E[\boldsymbol{X}((l/p + n)T)\, s(nT)^*]$. Dans ces conditions, le critère $\hat{C}_{NCIR-LR}(l)$, défini par (10) où $l_o$ a été remplacé par $l$, prend la forme suivante :

$$\hat{C}_{NCIR\text{-}LR}(l) \quad \triangleq \quad \frac{(1/K)\sum\limits_{n=0}^{K-1} y_{nc}((l/p+n)T)\, s(nT)^{*}}{(1/K)\sum\limits_{n=0}^{K-1} |s(nT)|^{2}} \quad =$$

$$\frac{\sum\limits_{n=0}^{K-1} y_{nc}((l/p+n)T)\, s(nT)^{*}}{\sum\limits_{n=0}^{K-1} |s(nT)|^{2}}$$

$$(14)$$

où $y_{nc}((l/p+n)T)$ correspond à la sortie, $y_{nc}((l/p+n)T) \triangleq \hat{\boldsymbol{W}}(l)^{\dagger}\boldsymbol{X}((l/p+n)T) = 2\mathrm{Re}[\hat{\boldsymbol{w}}_{nc}(l)^{\dagger}\boldsymbol{x}((l/p+n)T)]$, du filtre $\hat{\boldsymbol{W}}(l)$ dont l'entrée est $\boldsymbol{X}((l/p+n)T)$.

Dans ces conditions, la statistique suffisante $\hat{C}_{NCIR\text{-}LR}(l)$ correspond, au facteur de normalisation près, au résultat de la corrélation entre la séquence d'apprentissage et la sortie du filtre spatial LSL $\hat{\boldsymbol{W}}(l)$, comme cela est illustré à la figure 1.

Ainsi, tant que $l$ n'est pas proche de $l_o$, la séquence $s(nT)$ est faiblement corrélée au vecteur observation $\boldsymbol{X}((l/p+n)T)$, le vecteur $\boldsymbol{W}(l)$ n'est pas très loin du vecteur nul et la fonction $\hat{C}_{NCIR\text{-}LR}(l)$ approche zéro au bruit de variance près dû à la durée finie de la séquence d'apprentissage.

Au contraire, à l'instant de synchronisation $l = l_o$, la séquence $s(nT)$ est parfaitement corrélée avec la partie utile du vecteur observation $\boldsymbol{X}((l/p+n)T)$ donné, sous H1, par :

$$H1: \quad \boldsymbol{X}((l_o/p+n)T) \quad \approx \quad s(nT)\,\boldsymbol{H_S} \;+\; \boldsymbol{B_T}((l_o/p+n)T) \qquad (15)$$

et le vecteur $\boldsymbol{r}_{Xs}(l)$ devient proportionel à $\boldsymbol{H_s}$. Dès lors, le vecteur $\boldsymbol{W}(l)$ devient proportionnel au filtre adapté spatial (FAS) LSL, $\boldsymbol{W_s}(l) \triangleq [\boldsymbol{w}_{nc,s}(l)^{T}, \boldsymbol{w}_{nc,s}(l)^{\dagger}]^{T} \triangleq RX(l)^{-1}\boldsymbol{H_s}$, lequel correspond au filtre spatial LSL qui maximise le rapport Signal sur Bruit plus Interférence (Signal to Interférence plus Noise ratio (SINR)) en sortie. On peut facilement verifier que ce FAS LSL correspond aussi au FAS conventionnel mais pour un réseau virtuel à 2N capteurs recevant un signal utile dont le vecteur canal est $H_s$ et un bruit total de vecteur observé $\boldsymbol{B_T}((l_o/p+n)T)$ au temps $(l_o/p+n)T$.

Une conséquence de ce résultat est que le FAS LSL $W_s(l)$ est capable de rejeter jusqu'à $P = 2N$ - 1 interférences rectilignes à partir d'un réseau à $N$ capteurs et plus particulièrement $P = 1$ interférence rectiligne à partir d'un seul capteur, d'où le concept de Single Antenna interference Cancellation (SAIC). Dès lors, lorsque $K$ augmente, le critère $\hat{C}_{NCIR\text{-}LR}(l)$ pour $l = l_o$ approche la quantité $C_{NCIR\text{-}LR}(l_o)$ donnée par :

$$C_{NCIR\text{-}LR}(l_o) \quad \triangleq \quad \frac{r_{Xs}(l_o)^{\dagger}\, RX(l_o)^{-1}\, r_{Xs}(l_o)}{\pi_s} \quad = \quad \frac{[\mathrm{SINR}]_{nc}(l_o)}{1 + [\mathrm{SINR}]_{nc}(l_o)} \qquad (16)$$

où $[\mathrm{SINR}]_{nc}(l_o)$ est le SINR en sortie du FAS LSL $\boldsymbol{W_s}(l_o)$ à l'instant d'échantillonnage $l_o T_e$, défini par :

$$[\mathrm{SINR}]_{nc}(l_o) \;=\; \pi_s\, \boldsymbol{H_s}\, R_B(l_o)^{-1}\, \boldsymbol{H_s} \qquad (17)$$

Sous l'hypothèse d'un bruit total Gaussien et de séquence orthogonale, la probabilité de synchronisation correcte est directement liée à la valeur du paramètre $\rho_{nc} = K\,[\mathrm{SINR}]_{nc}(l_o)$, lequel n'est pas autre chose que le SINR en sortie de corrélation, juste avant la comparaison au seuil. Ce résultat reste valable en présence d'interférences rectilignes.

**Performances**

On suppose que le bruit total est composé d'une interférence rectiligne et d'un bruit de fond. Dans ces conditions, le vecteur bruit $b_T(lo/p + n)T$ prend la forme :

$$b_T((l_o/p + n)T) \approx j_1((l_o/p + n)T) \, h_1 + b((l_o/p + n)T) \tag{18}$$

où $b((l_o/p + n)T)$ est le vecteur bruit de fond à l'instant $((l_o/p + n)T)$, supposé centré, stationnaire et spatialement blanc, $h_1$ est le vecteur canal de l'interférence et $j_1((l_o/p + n)T)$ est l'enveloppe complexe de l'interférence à l'instant $((l_o/p + n)T)$. Dans ces conditions, le vecteur observation étendu pour l'instant $((l_o/p + n)T)$, $X((l_o/p + n)T)$, s'écrit

$$X((l_o/p + n)T) \approx s(nT) \, H_s + j_1((l_o/p + n)T) \, H_1 + B((l_o/p + n)T) \tag{19}$$

où $B((l_o/p + n)T) \triangleq [b((l_o/p + n)T)^T, b((l_o/p + n)T)^{\dagger}]^T$, $H_1 \triangleq [h_1^T, h_1^{\dagger}]^T$ et où les matrices $R(k)$ et $C(k)$, s'écrivent :

$$R(k) \approx \pi_1(k) \, h_1 \, h_1^{\dagger} + \eta_2 I \tag{20}$$

$$C(k) \approx \pi_1(k) \, h_1 \, h_1^{T} \tag{21}$$

où $\eta_2$ est la puissance moyenne du bruit de fond par capteur, I est la matrice identité $(N \times N)$ et $\pi_1(k) \triangleq E[|j_1(kT_e)|^2]$ est la puissance de l'interférence reçue par un capteur omnidirectionnel pour une propagation en espace libre.

Sous les hypothèses précédentes, le coefficient de corrélation spatiale, $\alpha_{1s,v}$, entre l'interférence et le signal utile pour le réseau virtuel de 2N capteurs, défini par le produit scalaire normalisé des vecteurs $H_s$ et $H_1$, et tel que $0 \leq |\alpha 1_{s,v}| \leq 1$, est donné par :

$$\alpha_{1s,v} \triangleq \frac{H_1^{\dagger} H_s}{(H_1^{\dagger} H_1)^{1/2}(H_s^{\dagger} H_s)^{1/2}} = |\alpha_{1s}| \cos\psi \tag{22}$$

où $\psi$ est la phase de $h_s^{\dagger} h_1$ et où $\alpha_{1s}$, tel que $0 \leq |\alpha_{1s}| \leq 1$, est le coefficient de corrélation spatiale entre l'interférence et le signal utile pour le réseau réel de N capteurs, défini par :

$$\alpha_{1s} \triangleq \frac{h_1^{\dagger} h_s}{(h_1^{\dagger} h_1)^{1/2}(h_s^{\dagger} h_s)^{1/2}} \triangleq |\alpha_{1s}| \, e^{-j\psi} \tag{23}$$

L'expression (22) montre que le réseau virtuel associé à un réseau à diversité d'espace est un réseau à diversité d'espace et de phase. De même, le réseau virtuel associé à un réseau à diversité d'espace, de diagramme et de polarisation est un réseau à diversité d'espace, de diagramme, de polarisation et de phase. Une conséquence de ce résultat, prouvée par le fait que $|\alpha_{1s,v}| = |\alpha_{1s}| \, |\cos\psi| \leq |\alpha_{1s}|$, est que le FAS LSL discrimine mieux les sources que le FAS et permet en particulier la réjection d'interférence mono-capteur par discrimination de phase. En particulier, le SINR en sortie du FAS LSL $W_s(l_o)$, défini par (17), prend la forme :

$$[\text{SINR}]_{nc}(l_O) \;=\; 2\varepsilon_S \left[ 1 \;-\; \frac{2\varepsilon_1}{1 + 2\varepsilon_1}\; |\alpha_{1s}|^2 \cos^2\psi \right] \tag{24}$$

où $\varepsilon_s \triangleq (\boldsymbol{h}_s{}^\dagger \boldsymbol{h}_s)\, \pi_s / \eta_2$ et $\varepsilon_1 \triangleq (\boldsymbol{h}_1{}^\dagger \boldsymbol{h}_1)\, \pi_1 / \eta_2$. L'expression (24) montre que $[\text{SINR}]_{nc}(l_o)$ est une fonction décroissante de $\cos^2\psi$, $|\alpha_{1s}|^2$ et $\varepsilon_1$, prenant sa valeur minimale en absence de discrimination spatiale entre le signal utile et l'interférence ($|\alpha_{1s}| = 1$), ce qui se produit en particulier pour une réception mono-capteur. Dans ces conditions, pour une interférence forte ($\varepsilon_1 \gg 1$), l'expression (24) prend la forme :

$$[\text{SINR}]_{nc}(l_O) \;\approx\; 2\varepsilon_S \left[ 1 \;-\; \cos^2\psi \right] \tag{25}$$

expression indépendante de $\varepsilon_1$, contrôlée par $2\varepsilon_s$ et $\cos^2\psi$, et montrant une capacité de réjection d'interférence rectiligne par discrimination de phase tant que $\psi \neq 0 + k\pi$, i.e. tant qu'il existe une discrimination de phase entre le signal utile et l'interférence, avec une dégradation des performances par rapport à la situation d'absence d'interférence croissante avec $\cos^2\psi$.

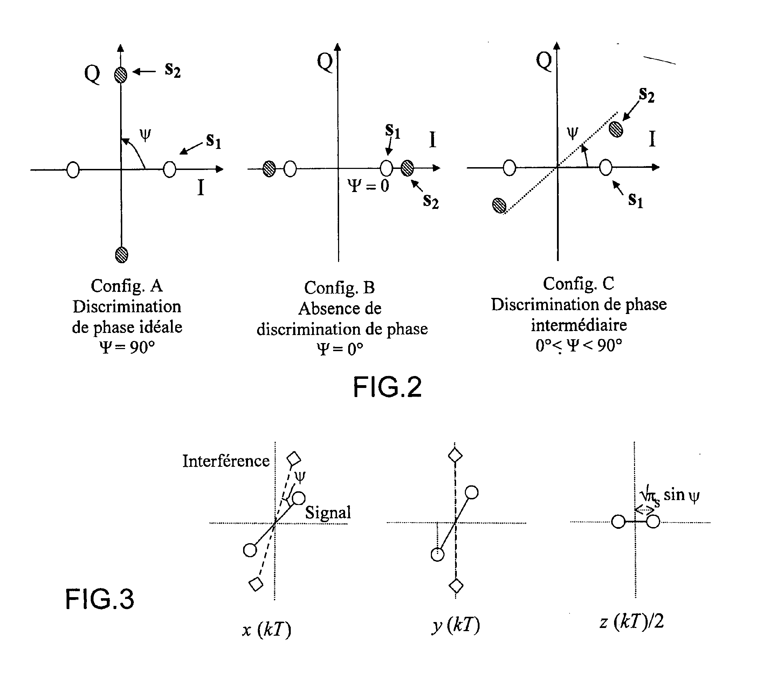

Des exemples de situations favorables, défavorables et intermédiaires relatives à la phase différentielle $\psi$ sont illustrées à la figure 2 pour une propagation en espace libre et une interférence BPSK.

En outre, la figure 3 illustre le fonctionnement du FAS LSL en présence d'une interférence BPSK forte, lequel compense la phase de l'interférence et déphase celle-ci de $\pi/2$ de manière à réduire au maximum la contribution de l'interférence sur l'axe partie réelle.

Selon une variante de réalisation, le procédé selon l'invention s'applique notamment à la modulation GMSK appartenant à la famille des modulations de fréquence à phase continue (Continuous Phase Modulation (CPM)). Il est montré dans [6] que la modulation GMSK peut être approximée par une modulation linéaire, générant l'enveloppe complexe utile approchée :

$$s(t) \;\approx\; \mu_s \sum_n j^n\, b_n\, f(t - nT) \tag{26}$$

où $b_n = \pm 1$ sont des variables aléatoires i.i.d correspondant aux symboles transmis si ceux-ci sont codés différentiellement dans la forme exacte de la modulation, T est la durée symbole et $f(t)$ est le filtre de mise en forme à valeurs réelles qui correspond soit au pulse principal dans la décomposition de Laurent ou au meilleur pulse au sens des moindres carrés par exemple. Dans les deux cas, le support temporel de $f(t)$ est approximativement $4T$ et la version échantillonnée de $f(t)$ au rythme symbole génère seulement 3 valeurs non nulles correspondant à $f(0)$, la valeur maximale de $f(t)$, et deux valeurs secondaires non nulles, $f(T)$ et $f(-T)$, telles que $f(T) = f(-T) < f(0)$. L'opération de dérotation consiste à multiplier l'échantillon, $s(nT)$, de $s(t)$ par $j^{-n}$, générant le signal échantillonné déroté, $sd(nT)$, défini par :

$$s_d(nT) \;\triangleq\; j^{-n}\, s(nT) \;\approx\; \mu_s \sum_m j^{m-n}\, b_m\, f((n-m)T) \;\triangleq\; \mu_s \sum_m b_m\, fd((n-m)T) \tag{27}$$

où $_{fd}(t) \triangleq j^{-t/T} f(t)$ est le filtre de mise en forme équivalent du signal GMSK linéarisé et déroté. On déduit de (27) que $s_d(nT)$ a la forme d'un signal BPSK échantillonné au rythme symbole mais avec deux différences par rapport à la BPSK. La première réside dans le fait que $fd(t)$ n'est pas un filtre de ½ Nyquist et que de l'interférence entre symboles (IES) apparaît après une opération de filtrage adapté au filtre $f_d(t)$. La seconde réside dans le fait que $f_d(t)$ n'est plus une fonction à valeurs réelles mais devient une fonction à valeurs complexes.

**Vecteur observation étendu**

Pour simplifier l'analyse, on considère un signal utile et une interférence GMSK synchronisées. Dans ces conditions, le vecteur observation échantillonné au rythme symbole et déroté s'écrit, pour l'instant de synchronisation $l_o T_e$,

$$x_d((l_o/p + n)T) \triangleq j^{-n} x((l_o/p + n)T) \approx j^{-n} s(nT) h_s + j^{-n} j_1(nT) h_1 + j^{-n} b((l_o/p + n)T)$$

$$(28)$$

Insérant (27) dans (28), on obtient :

$$x_d((l_o/p + n)T) \approx \mu_s [f(0) b_n + j f(-T) b_{n+1} - j r(T) b_{n-1}] h_s +$$

$$\mu_1 [f(0) b_n^1 + j f(-T) b_{n+1}^1 - j r(T) b_{n-1}^1] h_1 + j^{-n} b((l_o/p + n)T) \qquad (29)$$

où $\mu_1$ contrôle l'amplitude de l'interférence et où $b_n^1$ est le symbole $n$ de l'interférence. De (29), on déduit l'expression de l'observation dérotée étendue $X_d((l_{o/p} + n)T) \triangleq [x_d((l_{o/p} + n)T)^{\mathsf{T}}, x_d((l_{o/p} + n)T)^{\dagger}]^{\mathsf{T}}$, donnée par :

$$X_d((l_o/p + n)T) \approx \mu_s f(0) b_n H_s + \mu_s [f(-T) b_{n+1} - f(T) b_{n-1}] JH_s +$$

$$\mu_1 f(0) b_n^1 H_1 + \mu_1 [f(-T) b_{n+1}^1 - f(T) b_{n-1}^1] JH_1 + B_d((l_o/p + n)T) \qquad (30)$$

où $B_d((l_o/p + n)T) \triangleq [j^{-n} b((l_o/p + n)T)^{\mathsf{T}}, j^n b((l_o/p + n)T)^{\dagger}]^{\mathsf{T}}$ et J est la matrice $(2N \times 2N)$ définie par :

$$J \triangleq j \begin{pmatrix} I & O \\ O & -I \end{pmatrix}$$

$$(31)$$

où I et O sont respectivement les matrices identité et zéro ($N \times N$). Comparant (30) et (19), on déduit que contrairement aux sources BPSK, une source GMSK dérotée $i$ (utile ($i = s$) ou interférente ($i = 1$)) génère dans le vecteur observation étendu, $X_d((l_o|p + n)T)$, deux sources statistiquement indépendantes de puissances $\pi_{i1} \triangleq \mu_i^2 f(0)^2$ et $\pi_{i2} \triangleq \mu_i^2[f(-T)^2 + f(T)^2]$ et de vecteurs canal donnés respectivement par $H_i$ et $JH_i$, tels que $H_i^{\dagger} JH_i = 0$.

**Limitations des filtres spatiaux LSL**

On déduit du résultat précédent que deux degrés de liberté sont nécessaires pour traiter une interférence GMSK dérotée à partir de $X_d((l_{o/p} + n)T)$. Ainsi, tant que l'on considère des filtres spatiaux $(y((l_{o/p} + n)T) \triangleq W^{\dagger} X_d((l_{o/p} + n)T))$, le nombre de capteurs virtuels doit rester au moins supérieur au nombre d'interférences générées ($2N > 2P$), ce qui enlève l'intérêt des filtres LSL optimaux. Toutefois, dans la mesure où les deux interférences générées dans (30) sont deux versions filtrées différentes d'une même source, le problème de la réjection de ces deux interférences s'apparente au problème de la réjection d'une interférence ayant transitée par un canal de propagation à multitrajets. Dans ces conditions, le remplacement des filtres LSL spatiaux par des filtres LSL spatio-temporels permet de résoudre le problème.

**Synchronisation à partir de filtres ST LSL**

Un filtre ST LSL avec $L$ coefficients par filtre génère, à l'instant de synchronisation $l_o T_e$, la sortie $y((l_{o/p} + n)T)$ définie par :

$$y((l_o/p + n)T) \; \triangleq \; \sum_{q = -(L-1)/2}^{(L-1)/2} W_q^{\dagger} X_d((l_o/p + n - q)T) \; \triangleq \; W_{st}^{\dagger} X_{d,st}((l_o/p + n)T)$$

$$(32)$$

si $L$ est impair et

$$y((l_o/p + n)T) \; \triangleq \; \sum_{q = -L/2}^{L/2 - 1} W_q^{\dagger} X_d((l_o/p + n - q)T) \; \triangleq \; W_{st}^{\dagger} X_{d,st}((l_o/p + n)T)$$

$$(33)$$

si $L$ est pair, où les vecteurs ($2LN$x $1$) $W_{st}$ et $X_{d,st}((l_o/l_p + n)T)$ sont définis respectivement par $W_{st} \triangleq [W-(L-1)/2^T, ......, W_{(L-1)/2}^T]^T$ et $X_{d,st}((l_o/l_p + n)T) \triangleq [Xd((l_o/l_p + n + (L - 1)/2)^T,..., X_d((l_o/l_p + n - (L -1)/2)T)^T]^T$ si $L$ est impair et $W_{st} \triangleq [W-L/2^T, ......, W_{L/2} - {}_1^T]^T$ et $X_{d,st}(l_o/l_p+n)T) \triangleq [Xd((l_o/l_p + n + L/2)T)^T,..., X_d((l_o/l_p + n - L/2 + 1)T)^T]^T$ si $L$ est pair.

Dans ces conditions, la démarche proposée pour la synchronisation d'un signal GMSK en présence d'interférences GMSK est similaire à celle proposée pour les signaux BPSK au paragraphe 5 mais où le filtre spatial LSL ($2N$ x 1) $\hat{W}(l)$, défini par (13), est remplacé par le filtre ST LSL ($2LN$ x 1), $\hat{W}_{st}(l)$, défini par :

$$\hat{W}_{st}(l) \; \triangleq \; \hat{R}_{Xd,st}(l)^{-1} \, \hat{r}_{Xd,st,s}(l) \qquad\qquad (34)$$

où la matrice ($2LN$ x $2LN$) $\hat{R}_{Xd,st}(l)$ et le vecteur ($2LN$ x 1) $\hat{r}_{Xd,st,s(l)}$ sont définis respectivement par :

$$\hat{R}_{Xd,st}(l) \; \triangleq \; \frac{1}{K} \sum_{n = 0}^{K - 1} X_{d,st}((l/p + n)T) \, X_{d,st}((l/p + n)T)^{\dagger} \qquad (35)$$

$$\hat{r}_{Xd,st,s}(l) \; \triangleq \; \frac{1}{K} \sum_{n = 0}^{K - 1} X_{d,st}((l/p + n)T) \; s(nT)^{*}$$

$$(36)$$

Dans ces conditions, la statistique suffisante testée à l'instant $lT_e$ s'écrit :

$$\hat{C}_{NCIR-LR}(l \qquad \triangleq \qquad \frac{(1/K)\sum\limits_{n=0}^{K-1} y_{nc,st}((l/p+n)T)\, s(nT)^*}{(1/K)\sum\limits_{n=0}^{K-1} |s(nT)|^2} =$$

$$\frac{\sum\limits_{n=0}^{K-1} y_{nc,st}((l/p+n)T)\, s(nT)^*}{\sum\limits_{n=0}^{K-1} |s(nT)|^2}$$

$$(37)$$

où $y_{nc,st}((l/_p+n)T)$ correspond à la sortie, $y_{nc,st}((l/_p+n)T) \triangleq \hat{W}_{st}(l)^\dagger X_{d,st}((l/_p+n)T)$, du filtre $\hat{W}_{st}(l)$ dont l'entrée est $X_{d,st}((l/p+n)T)$. Cette statistique suffisante $\hat{C}_{NCIR-LR}(l)$ correspond, au facteur de normalisation près, au résultat de la corrélation entre la séquence d'apprentissage et la sortie du filtre ST LSL $\hat{W}_{st}(l)$.

L'expression (37) peut aussi s'écrire :

$$\hat{C}_{NCIR-LR}(l) \qquad \triangleq \qquad \frac{\hat{r}_{Xd,st,s}(l)^\dagger\, \hat{R}_{Xd,st}(l)^{-1}\hat{r}_{Xd,st,s}(l)}{(1/K)\sum\limits_{n=0}^{K-1} |s(nT)|^2} \qquad (38)$$

Les étapes du procédé pour les signaux GMSK sont résumées ci-après :

- Etape 0 : Initialisation $l = l_{min}$ $(l_{min} = 0$ par exemple) et choix du seuil de détection $\beta$
- Etape 1 : Dérotation des observations et construction des vecteurs observation spatio-temporels $(2LN \times 1)$ $X_{d,st}((l/p+n)T)$, $0 \le n \le K - 1$
- Etape 2 : Estimation de $\hat{r}_{Xd,st,s}(l)$ et de $\hat{R}_{Xd,st}(l)$
- Etape 3 : Calcul de la statistique suffisante $\hat{C}_{NCIR-LR}(l)$, définie par (38)
- Etape 4 : Comparaison de $\hat{C}_{NCIR-LR}(l)$ au seuil $\beta$
- Etape 5 : Décision

    ○ Si $\hat{C}_{NCIR-LR}(l) < \beta$

        ■ Si $\hat{C}_{NCIR-LR}(l-1) < \beta$

            • $l = l+1$
            • retour à l'étape 1

        ■ *Si* $\hat{C}_{NCIR-LR}(l-1) \ge \beta$

            • L'instant de synchronisation est $\hat{l}_o T_e$ où $l = \hat{l}_o$ maximise $\hat{C}_{NCIR-LR}(l)$ sur l'ensemble des 1 stockés

    o *Si* $\hat{C}_{NCIR-LR}(l) \ge \beta$

        • Stockage de $l$ et de $\hat{C}_{NCIR-LR}(l)$
        • $l = l + 1$
        • retour à l'étape 1

Il est possible de montrer qu'en présence de $P$ interférences GMSK, une condition suffisante de réjection de toutes les interférences (y compris l'interférence inter-symbole) en sortie du filtre $\hat{W}_{st}(l_o)$ est que la condition suivante soit vérifiée :

$$P < \frac{L\,(2N-1)-2}{L+3} \qquad\qquad (39)$$

ce qui engendre la condition suffisante $P < 2N-1$ pour $L$ infiniment grand et ce qui montre du même coup la possibilité de traiter, grâce aux filtres ST LSL optimaux et pour $N > 1$, un nombre d'interférences GMSK au moins égal à $2(N-1)$ à partir de $N$ capteurs et donc deux fois supérieures à ce qu'un traitement conventionnel permet d'envisager. Toutefois cette condition n'est que suffisante et ne prend pas en compte, par exemple, le fait que l'opération de corrélation entre la sortie $y_{nc,sk}(l_o l_p + n)T)$ et la séquence $s(nT)$ apporte un gain supplémentaire en SINR de l'ordre de $K$. De ce fait, une réjection sous le bruit de fond de toutes les sources d'interférences en sortie du filtre $\hat{W}_{st}(l_o)$ n'est pas forcément nécessaire à la prise de synchronisation. Dans ces conditions, un nombre limité de coefficients ($L$ = 3 ou 5) permet d'obtenir de très bons résultats dans de nombreuses situations inhérentes au contexte des réseaux GSM, y compris pour $N = P = 1$.

Les filtres ST LSL optimaux peuvent également s'avérer avantageux pour la synchronisation des signaux BPSK en particulier lorsque le retard de propagation n'est pas un multiple de la période d'échantillonnage.

Le procédé décrit précédemment s'applique pour tout type de canaux de propagation (étalés temporellement ou non).

**REFERENCES**

[1] S. BENSLEY, B. AAZHANG, "Subspace-based channel estimation for CDMA system, IEEE Trans Communication, Vol 44, pp. 1009-1020, Aug. 1996

[2] S. BENSLEY, B. AAZHANG,"Maximum Likelihood synchronization of a single user for CDMA systems, IEEE Trans Communication, Vol 46, pp. 392-399, March 1998

[3] L.E. BRENNAN, I.S. REED, "An adaptive array signal processing algorithm for communications", IEEE Trans. Aerosp. Electronic Systems, Vol 18, N°1, pp. 124-130, Jan 1982.

[4] R.T. COMPTON, "An adaptive array in a spread spectrum communication system", Proc IEEE, Vol 66, N°3, pp. 289-298, March 1978

[5] D.M. DUGLOS, R.A. SCHOLTZ, "Acquisition of spread spectrum signals by an adaptive array", IEEE Trans. Acou. Speech. Signal Proc., Vol 37, N°8, pp. 1253-1270, Aug. 1989.

[6] P.A. LAURENT, "Exact and approximate construction of digital phase modulations by superposition of amplitude modulated pulses (AMP)", IEEE Trans.on Communications, Vol 34, N° 2, pp. 150-160, Feb. 1986.

[7] B. PICINBONO, P. CHEVALIER, "Widely linear estimation with complex data", IEEE Trans. Signal Processing, Vol 43, N°8, pp. 2030-2033, Aug. 1995.

[8] H.L. VAN TREES, "Detection, Estimation and Modulation Theory", John Wiley and Sons, 1971.

[9] J.H. WINTERS, "Spread spectrum in a four phase communication system employing adaptive antennas", IEEE Trans. On Communications, Vol 30, N°5, pp. 929-936, May 1982.

**Revendications**

1.   Procédé de synchronisation d'un signal sensiblement rectiligne se propageant à travers un canal inconnu, en présence d'interférences sensiblement rectilignes inconnues, reçu par un réseau de N capteurs, dans lequel on utilise une séquence d'apprentissage $s(nT)$ connue de K symboles et échantillonnée au rythme symbole $T$ ($s(nT)$, $0 \leq n \leq K - 1$) où l'on définit à partir des observations $x((n + l/l_p)T)$ sur la durée de la séquence d'apprentissage, *où $p = T/Te$ est entier et $Te$ la période d'échantillonnage*, un vecteur observation virtuel $X((n + l/l_p)T) = [x((n + l/p)T)^T, x((n + l/l_p)T)^{\dagger}]^T$, ainsi qu'un critère de décision ou statistique de décision en tenant compte du caractère non circulaire à l'ordre 2 des interférences, en utilisant les première et seconde matrices de corrélation du vecteur observation virtuel $X((n + l/p)T)$.

2.   Procédé de synchronisation selon la revendication 1, **caractérisé en ce qu'**il comporte au moins les étapes suivantes, pour des signaux rectilignes :

- acquérir des vecteurs observation *(N x* 1), *x((l/p + n)T), 0 ≤ n ≤ K -* 1, où *T = pT$_e$* est la durée symbole, *p* un entier et *T$_e$* la période d'échantillonnage, 1 le retard du signal,
- construire des vecteurs observation virtuels *(2N x 1), X((n + l/p)T) = [x((n + l/p)T)$^T$, x((n + l/p)T)$^†$]$^{T,}$*
- choisir L le nombre de coefficients temporels et construire des vecteurs observation virtuels spatio-temporels *(2LN x1), X$_{st}$(n + l/p)T)$\triangleq$ [X((l/p + n + (L -* 1)/2)T)$^T$,..., X((l/p + n - (L -* 1)/2)T)$^T$]$^T$ si *L* est impair et *X$_{st}$((l/p + n)T)$\triangleq$ [X((l/p + n + L/2)T)$^T$, ... , X((l/p + n - L/2 +* 1)T)$^T$]$^T$ si *L* est pair,
- déterminer le vecteur d'inter corrélation $\hat{r}X_{,st,s}(l)$ et la matrice de corrélation $\hat{R}X_{,st}(l)$ des observations spatio-temporelles, pour l'instant d'échantillonnage 1, en tenant compte de la seconde matrice de corrélation du vecteur *x((l/p + n)T),*
- définir un filtre spatio-temporel ST et son estimée à partir de $\hat{R}_{X,st}(l)$ et $\hat{r}_{X,st,s}(l)$, tel que $\hat{W}_{st}(l) \triangleq \hat{R}_{X,st}(l)^{-1}\hat{r}_{X,st,s}(l)$,
- définir un critère de synchronisation $\hat{C}_{NCIR-LR}(l)$ en corrélant la sortie du filtre saptio-temporel $W_{st}(l)$ et la séquence d'apprentissage,
- comparer le critère $C_{NCIR-LR}(l)$ à un seuil β fixé pour une probabilité de fausse alarme donnée.

**3.** Procédé selon la revendication 1, **caractérisé en ce qu'**il comporte pour des signaux CPM à deux états, une étape de pré-traitement de dérotation des observations reçues.

**4.** Procédé selon la revendication 2, **caractérisé en ce que** :

$$\hat{C}_{NCIR-LR}(l) \quad \triangleq \quad \frac{\hat{r}_{X,st,s}(l)^{\dagger}\,\hat{R}_{X,st}(l)^{-1}\hat{r}_{X,st,s}(l)}{(1/K)\sum_{n=0}^{K-1}|s(nT)|^2}$$

où la matrice *(2LN x 2LN)* $\hat{R}_{X,st}(l)$ et le vecteur *(2LN x* 1) $\hat{r}_{X,st,s}(l)$ sont définis respectivement par :

$$\hat{R}_{X,st}(l) \quad \triangleq \quad \frac{1}{K}\sum_{n=0}^{K-1} X_{st}((l/p+n)T)\,X_{st}((l/p+n)T)^{\dagger}$$

$$\hat{r}_{X,st,s}(l) \quad \triangleq \quad \frac{1}{K}\sum_{n=0}^{K-1} X_{st}((l/p+n)T)\;s(nT)^{*}$$

où $0 \le C_{NCIR-LR}(l) \le 1$.

**5.** Dispositif pour synchroniser un signal sensiblement rectiligne se propageant à travers un canal inconnu, en présence d'interférences sensiblement rectilignes inconnues, dans un réseau de N capteurs, dans lequel on utilise une séquence d'apprentissage *s(nT)* connue de K symboles et échantillonnée au rythme symbole (*s(nT), 0 ≤ n ≤ K -* 1), comportant un dispositif adapté à déterminer un critère de décision ou statistique de décision à partir des observations *x((n + l/p)T)* sur la durée de la séquence d'apprentissage, *où p = T/Te* est entier et *Te* la période d'échantillonnage, un vecteur observation virtuel *X((n + l/p)T) = [x((n + l/p)T)$^T$, x((n + l/p)T)$^†$]$^T$*, ainsi qu'un critère de décision ou statistique de décision en tenant compte du caractère non circulaire à l'ordre 2 des interférences, en utilisant les première et seconde matrices de corrélation du vecteur observation virtuel *X((n + l/p)T)*.

**6.** Dispositif selon la revendication 5, **caractérisé en ce qu'**il comporte un réseau de capteurs virtuels (N+1 à 2N), un filtre (1), un dispositif de corrélation du signal issu du filtre et de la séquence d'apprentissage, un dispositif de décision recevant le signal corrélé.

**7.** Dispositif selon la revendication 5, **caractérisé en ce qu'**il comporte un dispositif adapté à transformer un signal CPM à 2 états en un signal quasi-rectiligne.

8. Utilisation du procédé selon l'une des revendications 1 à 4 ou du dispositif selon l'une des revendications 5 à 6 à la synchronisation d'un signal à modulation mono-dimensionnelle : ASK, BPSK...

9. Utilisation du procédé selon la revendication 3 et du dispositif selon la revendication 7 pour synchroniser un signal CPM à 2 états de type MSK, GMSK...

**Claims**

1. A method for synchronising a substantially rectilinear signal propagating through an unknown channel, in the presence of substantially rectilinear unknown interference, received by an array of N sensors, wherein a known learning sequence $s(nT)$ of K symbols is used and sampled at a symbol rate $T$ ($s(nT)$, $0 \leq n \leq K - 1$) where, on the basis of observations $x((n + l/p)T)$ over the duration of the learning sequence, where $p = T/Te$ is an integer and $Te$ is the sampling period, a virtual observation vector $X((n + l/p)T) = [x((n + l/p)T)^T, x((n + l/p)T)^\dagger]^T$ is defined, as well as a decision criterion or decision statistic taking into account the 2$^{nd}$ order non-circular character of the interference, using the first and second correlation matrices of the virtual observation vector $X((n + l/p)T)$.

2. The synchronising method according to claim 1, **characterised in that** it comprises at least the following steps for rectilinear signals:

   - acquiring observation vectors *(N x 1)*, $x((l/p + n)T)$, $0 \leq n \leq K - 1$, where $T = pT_e$ is the symbol duration, *p* is an integer and $T_e$ is the sampling period, *l* is the signal delay,
   - constructing virtual observation vectors *(2N x 1)*, $X((n + l/p)T) = [x((n + l/p)T)^T, x((n + l/p)T)^\dagger]^T$,
   - selecting the number of time coefficients L and constructing virtual space-time observation vectors *(2LN x 1)*, $X_{st}(n + l/p)T) \triangleq [X((l/p + n + (L-1)/2)T)^T ..., X((l/p + n - (L-1)/2) T)]^T$ if L is odd, and $X_{st}(l/p + n)T) \triangleq [X((l/p + n + L/2)T)^T ..., X((l/p + n - L/2 + 1T)^T]^T$ if L is even,
   - determining the inter-correlation vector $\hat{r}_{X,st,s}(l)$ and the correlation matrix $\hat{R}_{X,st}(l)$ of the space-time observations, for the sampling instant 1, taking into account the second correlation matrix of the vector $x((l/p + n)T)$,
   - defining a space-time filter ST and its estimate from $R_{X,st}(l)$ and $\hat{r}_{X,st,s}(l)$ such that $\hat{W}_{st}(l) \triangleq \hat{R}_{X,st}(l)^{-1} \hat{r}_{X,st,s}(l)$,
   - defining a synchronisation criterion $\hat{C}_{NCIR-LR}(l)$ by correlating the output of the space-time filter $W_{st}(l)$ and the learning sequence,
   - comparing the criterion $\hat{C}_{NCIR-LR}(l)$ with a threshold β that is set for a given false alarm probability.

3. The method according to claim 1, **characterised in that** for two-state CPM signals, it comprises a pre-processing step of derotating the received observations.

4. The method according to claim 2, **characterised in that**:

$$\hat{C}_{NCIR-LR}(l) \quad \triangleq \quad \frac{\hat{r}_{X,st,s}(l)^\dagger \, \hat{R}_{X,st}(l)^{-1} \hat{r}_{X,st,s}(l)}{(1/K) \sum_{n=0}^{K-1} |s(nT)|^2}$$

where the matrix *(2LN x 2LN)* $\hat{R}_{X,st}(l)$ and the vector *(2LN x 1)* $\hat{r}_{X,st,s}(l)$ are respectively defined by:

$$\hat{R}_{X,st}(l) \quad \triangleq \quad \frac{1}{K} \sum_{n=0}^{K-1} X_{st}((l/p + n)T) \, X_{st}((l/p + n)T)^\dagger$$

$$\hat{r}_{X,st,s}(l) \quad \triangleq \quad \frac{1}{K} \sum_{n=0}^{K-1} X_{st}((l/p + n)T) \; s(nT)^*$$

where $0 \le \hat{C}_{NCIR\text{-}LR}(l) \le 1$.

5. A device for synchronising a substantially rectilinear signal propagating through an unknown channel, in the presence of substantially rectilinear unknown interference, in an array of N sensors, wherein a known learning sequence $s(nT)$ of K symbols is used and sampled at a symbol rate $(s(nT), 0 \le n \le K - 1)$, comprising a device that is designed to determine a decision criterion or decision statistic on the basis of observations $x((n + l/p)T)$ over the duration of the learning sequence, where $p = T/Te$ is an integer and $Te$ is the sampling period, a virtual observation vector $X((n + l/p)T) = [x((n + l/p)T)^T, x((n + l/p)T)^\dagger]^T$, as well as a decision criterion or decision statistic taking into account the $2^{nd}$ order non-circular character of the interference, using the first and second correlation matrices of the virtual observation vector $X((n + l/p)T)$.

6. The device according to claim 5, **characterised in that** it comprises an array of virtual sensors (N+1 to 2N), a filter (1), a device for correlating the signal coming from the filter and the learning sequence and a decision-making device receiving the correlated signal.

7. The device according to claim 5, **characterised in that** it comprises a device that is designed to convert a 2-state CPM signal into a quasi-rectilinear signal.

8. The use of the method according to any one of claims 1 to 4 or of the device according to one of claims 5 to 6 for synchronising a one-dimensional modulation signal: ASK, BPSK, etc.

9. The use of the method according to claim 3 and of the device according to claim 7 for synchronising a 2-state CPM signal of the MSK, GMSK, etc. type.

**Patentansprüche**

1. Verfahren zum Synchronisieren eines im Wesentlichen rechteckigen Signals, das sich durch einen unbekannten Kanal ausbreitet, in Anwesenheit von im Wesentlichen rechteckigen unbekannten Interferenzen, das von einer Anordnung von N Sensoren empfangen wird, wobei eine bekannte Lernsequenz $s(nT)$ von K Symbolen verwendet und mit einer Symbolrate $T$ $(s(nT), 0 \le n \le K - 1)$ abgetastet wird, wobei auf der Basis von Beobachtungen $x((n + l/p)T)$ über die Dauer der Lernsequenz, wobei $p = T/Te$ eine ganze Zahl und $Te$ die Abtastperiode ist, ein virtueller Beobachtungsvektor $X((n + l/p)T) = [x((n + l/p)T)^T, x((n + l/p)T)^\dagger]^T$ sowie ein Entscheidungskriterium oder eine Entscheidungsstatistik unter Berücksichtigung des in der 2. Ordnung nichtkreisförmigen Charakters der Interferenzen unter Anwendung der ersten und zweiten Korrelationsmatrix des virtuellen Beobachtungsvektors $X((n + l/p)T)$ definiert werden.

2. Synchronisierungsverfahren nach Anspruch 1, **dadurch gekennzeichnet, dass** es wenigstens die folgenden Schritte für rechtlinige Signale beinhaltet:

   - Einholen von Beobachtungsvektoren $(N \times 1)$, $x((l/p + n)T)$, $0 \le n \le K - 1$, wobei $T = pT_e$ die Symboldauer, $p$ eine ganze Zahl und $T_e$ die Abtastperiode, $l$ die Signalverzögerung ist,
   - Konstruieren von virtuellen Beobachtungsvektoren $(2N \times 1)$, $X((n + l/p)T) = [x((n + l/p)T)^T, x((n + l/p)T)^\dagger]^T$,
   - Wählen der Zahl der Zeitkoeffizienten L und Konstruieren von virtuellen Raum-Zeit-Beobachtungsvektoren $(2LN \times 1)$, $X_{st}(n + l/p)T) \triangleq [X((l/p + n + (L - 1)/2)T)^T ,..., X((l/p + n - (L-1)/2)^T]^T$, wenn L ungerade ist, und $X_{st}((l/p + n)T)$ $[X((l/p + n + L/2)T)^T,..., X((l/p + n - L/2 + 1)T)^T]^T$, wenn L gerade ist,
   - Ermitteln des Interkorrelationsvektors $\hat{r}_{X,st,s}(l)$ und der Korrelationsmatrix $\hat{R}_{X,st}(l)$ der Raum-Zeit-Beobachtungen für den Abtastzeitpunkt $l$ unter Berücksichtigung der zweiten Korrelationsmatrix des Vektors $x((l/p + n)T)$,
   - Definieren eines Raum-Zeit-Filters ST und seiner Schätzung anhand von $\hat{R}_{X,st}(l)$ und $\hat{r}_{X,st,s}(l)$, so dass $\hat{W}_{st}(l) \triangleq \hat{R}_{X,st}(l) \hat{r}_{X,st,s}(l)$,
   - Definieren eines Synchronisationskriteriums $\hat{C}_{NCIR-LR}(l)$ durch Korrelieren des Ausgangs des Raum-Zeit-Filters $\hat{W}_{st}(l)$ und der Lernsequenz,

- Vergleichen des Kriteriums $\hat{C}_{NCIR\text{-}LR}(l)$ mit einem Schwellenwert β, der für eine gegebene Fehlalarmwahrscheinlichkeit festgelegt ist.

3. Verfahren nach Anspruch 1, **dadurch gekennzeichnet, dass** es für CPM-Signale mit zwei Zuständen einen Vorverarbeitungsschritt des Derotierens der empfangenen Beobachtungen beinhaltet.

4. Verfahren nach Anspruch 2, **dadurch gekennzeichnet, dass**:

$$\hat{C}_{NCIR\text{-}LR}(l) \triangleq \frac{\hat{r}_{X,st,s}(l)^{\dagger} \, \hat{R}_{X,st}(l)^{-1} \hat{r}_{X,st,s}(l)}{(1/K) \sum_{n=0}^{K-1} |s(nT)|^2}$$

wobei die Matrix *(2LN x 2LN)* $\hat{R}_{X,st}(l)$ und der Vektor *(2LN x 1)* $\hat{r}_{X,st,s}(l)$ jeweils definiert werden durch:

$$\hat{R}_{X,st}(l) \triangleq \frac{1}{K} \sum_{n=0}^{K-1} X_{st}((l/p+n)T) \, X_{st}((l/p+n)T)^{\dagger}$$

$$\hat{r}_{X,st,s}(l) \triangleq \frac{1}{K} \sum_{n=0}^{K-1} X_{st}((l/p+n)T) \, s(nT)^{*}$$

wobei $0 \leq \hat{C}_{NCIR\text{-}LR}(l) \leq 1$.

5. Vorrichtung zum Synchronisieren eines im Wesentlichen rechteckigen Signals, das sich durch einen unbekannten Kanal ausbreitet, in Anwesenheit von im Wesentlichen rechteckigen unbekannten Interferenzen, in einer Anordnung von N Sensoren, wobei eine bekannte Lernsequenz $s(nT)$ von K Symbolen verwendet und mit einer Symbolrate *(s(nT), 0 ≤ n ≤ K - 1)* abgetastet wird, umfassend eine Vorrichtung mit der Aufgabe, Folgendes zu ermitteln: ein Entscheidungskriterium oder eine Entscheidungsstatistik auf der Basis von Beobachtungen $x((n+l/p)T)$ über die Dauer der Lernsequenz, wobei $p = T/Te$ eine ganze Zahl und *Te* die Abtastperiode ist, einen virtuellen Beobachtungsvektor $X((n+l/p)T) = [x((n+l/p)T)^{T}, x((n+l/p)T)^{\dagger}]^{T}$ sowie ein Entscheidungskriterium oder eine Entscheidungsstatistik unter Berücksichtigung des in der 2. Ordnung nichtkreisförmigen Charakters der Interferenzen unter Anwendung der ersten und zweiten Korrelationsmatrizen des virtuellen Beobachtungsvektors $X((n+l/p)T)$.

6. Vorrichtung nach Anspruch 5, **dadurch gekennzeichnet, dass** sie eine Anordnung von virtuellen Sensoren (N+1 bis 2N), ein Filter (1), eine Vorrichtung zum Korrelieren des vom Filter kommenden Signals und der Lernsequenz und eine das korrelierte Signal empfangende Entscheidungsvorrichtung umfasst.

7. Vorrichtung nach Anspruch 5, **dadurch gekennzeichnet, dass** sie eine Vorrichtung mit der Aufgabe umfasst, ein CPM-Signal mit zwei Zuständen in ein quasi-rechteckiges Signal umzuwandeln.

8. Anwendung des Verfahrens nach einem der Ansprüche 1 bis 4 oder der Vorrichtung nach einem der Ansprüche 5 bis 6 zum Synchronisieren eines eindimensionalen Modulationssignals: ASK, BPSK usw.

9. Anwendung des Verfahrens nach Anspruch 3 und der Vorrichtung nach Anspruch 7 zum Synchronisieren eines CPM-Signals mit zwei Zuständen des Typs MSK, GMSK usw.

Calcul et application du filtre de Wiener LSL
-> réjection des interférences
-> réjection des trajets décorrélés

Calcul de la statistique suffisante

## FIG.1

EP 1 854 226 B1

FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0665665 A

**Littérature non-brevet citée dans la description**

- **S. BENSLEY ; B. AAZHANG.** Subspace-based channel estimation for CDMA system. *IEEE Trans Communication,* Août 1996, vol. 44, 1009-1020
- **S. BENSLEY ; B. AAZHANG.** Maximum Likelihood synchronization of a single user for CDMA systems. *IEEE Trans Communication,* Mars 1998, vol. 46, 392-399
- **L.E. BRENNAN ; I.S. REED.** An adaptive array signal processing algorithm for communications. *IEEE Trans. Aerosp. Electronic Systems,* Janvier 1982, vol. 18 (1), 124-130
- **R.T. COMPTON.** An adaptive array in a spread spectrum communication system. *Proc IEEE,* Mars 1978, vol. 66 (3), 289-298
- **D.M. DUGLOS ; R.A. SCHOLTZ.** Acquisition of spread spectrum signals by an adaptive array. *IEEE Trans. Acou. Speech. Signal Proc.,* Août 1989, vol. 37 (8), 1253-1270
- **P.A. LAURENT.** Exact and approximate construction of digital phase modulations by superposition of amplitude modulated pulses (AMP). *IEEE Trans.on Communications,* Février 1986, vol. 34 (2), 150-160
- **B. PICINBONO ; P. CHEVALIER.** Widely linear estimation with complex data. *IEEE Trans. Signal Processing,* Août 1995, vol. 43 (8), 2030-2033
- **H.L. VAN TREES.** Detection, Estimation and Modulation Theory. John Wiley and Sons, 1971
- **J.H. WINTERS.** Spread spectrum in a four phase communication system employing adaptive antennas. *IEEE Trans. On Communications,* Mai 1982, vol. 30 (5), 929-936